Europäisches Patentamt

European Patent Office

Office européen des brevets

(19)

(11) Publication number: **0 081 294**
**A2**

(12) **EUROPEAN PATENT APPLICATION**

(21) Application number: **82305859.9**

(22) Date of filing: **04.11.82**

(51) Int. Cl.³: **H 04 Q 1/448**
**H 04 J 6/02, H 04 B 3/20**

(30) Priority: **06.11.81 IL 64230**

(43) Date of publication of application:
**15.06.83 Bulletin 83/24**

(84) Designated Contracting States:
**AT BE CH DE FR GB IT LI LU NL SE**

(71) Applicant: **ELECTRONICS CORPORATION OF ISRAEL
LIMITED
88 Giborei Israel Street
Tel Aviv(IL)**

(72) Inventor: **Piasecki, Yehoshua
6 Armonim Street
Ramat Gan(IL)**

(74) Representative: **Freed, Arthur Woolf et al,
MARKS & CLERK 57-60 Lincoln's Inn Fields
London WC2A 3LS(GB)**

(54) **Tone detector.**

(57) A digital, time-shared tone detector which provides
precise detection of one or more tones of predetermined
frequency and which involves relatively low cost compo-
nents, comprising apparatus (10) for receiving the sign bit of
a signal being monitored over a multiplicity of channels,
sequence up-date apparatus (12) operative to present an
updated sequence of sign bits for each of the multiplicity of
channels, comparator apparatus (16) operative to compare
the updated sequence with at least one pattern representative of at least one tone frequency, apparatus receiving the
output of the comparator apparatus and being operative to
indicate the percentage of occurrances wherein matching
was indicated by the comparator (32), and threshold appar-
atus (50) operative to receive the output of the indicating
apparatus and to indicate whether the indicated percentage
exceeds a predetermined threshold indicating predeter-
mined frequency tone detection.

./...

EP 0 081 294 A2

Croydon Printing Company Ltd

FIG. 1/1

- 1 -

0081294

ELECTRONICS CORPORATION OF ISRAEL LTD.

TONE DETECTOR

## FIELD OF THE INVENTION

The present invention relates to apparatus for detecting a tone having a precisely predetermined frequency.

## BACKGROUND OF THE INVENTION

Tone detectors of various configurations are well known in the prior art for many different applications. In telecommunications, tone detectors find particular applications in echo suppression circuitry and tone signalling. Analog tone detectors may comprise frequency filters. Digital tone detectors normally operate by counting zero crossings or other period indicators.

Multiplexed tone detectors are also known. One example is described in an article entitled "PERFORMANCE EVALUATION OF A 30 VOICE CHANNEL MULTIPLEX DIGITAL ECHO SUPPRESSOR" by E. Penicaud and J. M. Durant which appeared in the conference record of the 1976 International Conference on Communication in Volume III at pages 36-18 - 36-23.

- 2 -

0081294

## SUMMARY OF THE INVENTION

The present invention seeks to provide a digital, time-shared tone detector which provides precise detection of one or more tones of predetermined frequency and which involves relatively low cost components.

There is thus provided in accordance with an embodiment of the present invention tone detector apparatus comprising:

apparatus for receiving the sign bit of a signal being monitored over a multiplicity of channels;

sequence update apparatus operative to present an updated sequence of sign bits for each of the multiplicity of channels;

comparator apparatus operative to compare the updated sequence with at least one pattern representative of at least one tone frequency;

apparatus receiving the output of the comparator apparatus and being operative to indicate the percentage of occurances wherein matching was indicated by the comparator; and

threshold apparatus operative to receive the output of the indicating apparatus and to indicate whether the indicated percentage exceeds a predetermined threshold indicating predetermined frequency tone detection.

Further in accordance with an embodiment of the present invention, the tone detector apparatus also comprises apparatus for indicating the previous detection status of a tone and coincidence gate apparatus operative to provide a status change output only in the event that done detection is indicated by the threshold apparatus and such detection was not previously indicated.

Additionally in accordance with an embodiment of the invention, the sequence update apparatus comprises an n-bit latch which receives the sign bit input as a zero bit, a RAM which stores the lowest n-1 bits of the latch contents and reads them out to the latch as the highest n-1 bits upon the next sample and a tri-state buffer which interfaces between the RAM and the latch.

Further in accordance with an embodiment of the invention, the comparator apparatus is operative during each cycle to compare the latch contents with a pattern and its inverse pattern for each of two distinct frequencies. Additionally in accordance with an embodiment of the invention, the comparator apparatus comprises a multiplexer for sequencing the plurality of patterns to the comparator during each sampling cycle.

Additionally in accordance with an embodiment of the present invention, the counter apparatus comprises an up-down counter and increment/decrement logic means responsive to the output of the comparator and to frequency dependent weighting apparatus for determining whether a count and what count is to be added or subtracted for each sample. Further in accordance with an embodiment of the invention, the counter apparatus also comprises a RAM for storage of the counts of the individual multiplicity of channels.

Further in accordance with the invention, the tone detector apparatus may comprise apparatus for sampling incident tones and providing sign bits representative thereof.

## BRIEF DESCRIPTION OF THE DRAWINGS

The present invention will be more fully understood and appreciated from the following detailed description, taken in conjunction with the drawings in which:

Fig. 1 is a schematic block diagram of a tone detector constructed and operative in accordance with an embodiment of the present invention;

Fig. 2 is a timing diagram illustrating the time relationship of the various timing signals employed in the tone detector illustrated in Fig. 1; and

Fig. 3 is a detailed electrical schematic diagram of the apparatus of Fig. 1.

- 5 -                    0081294

### DETAILED DESCRIPTION OF THE INVENTION

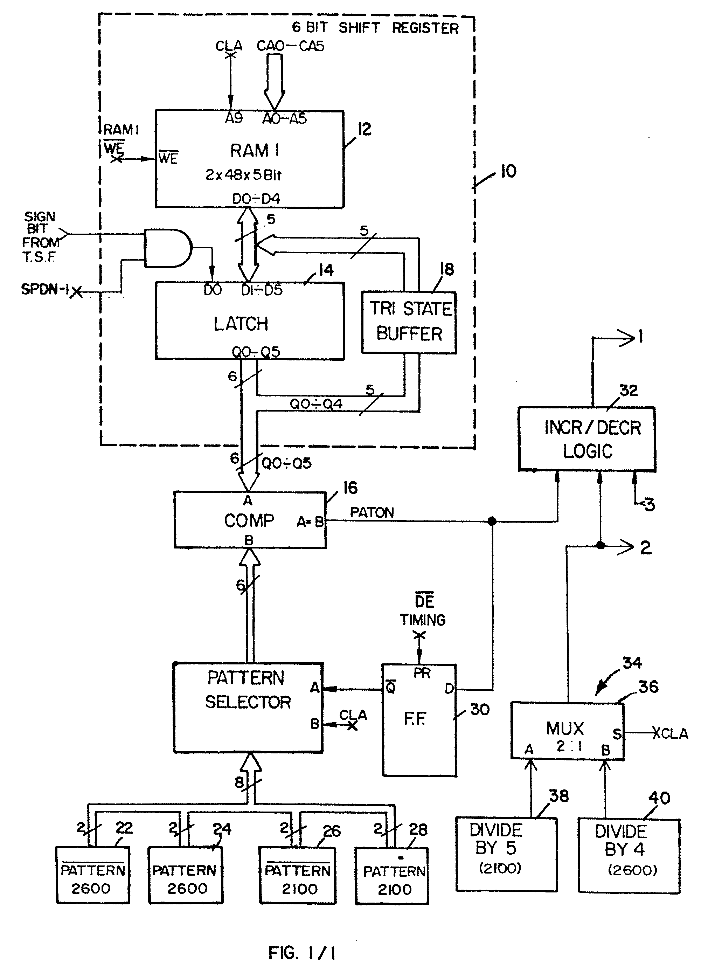

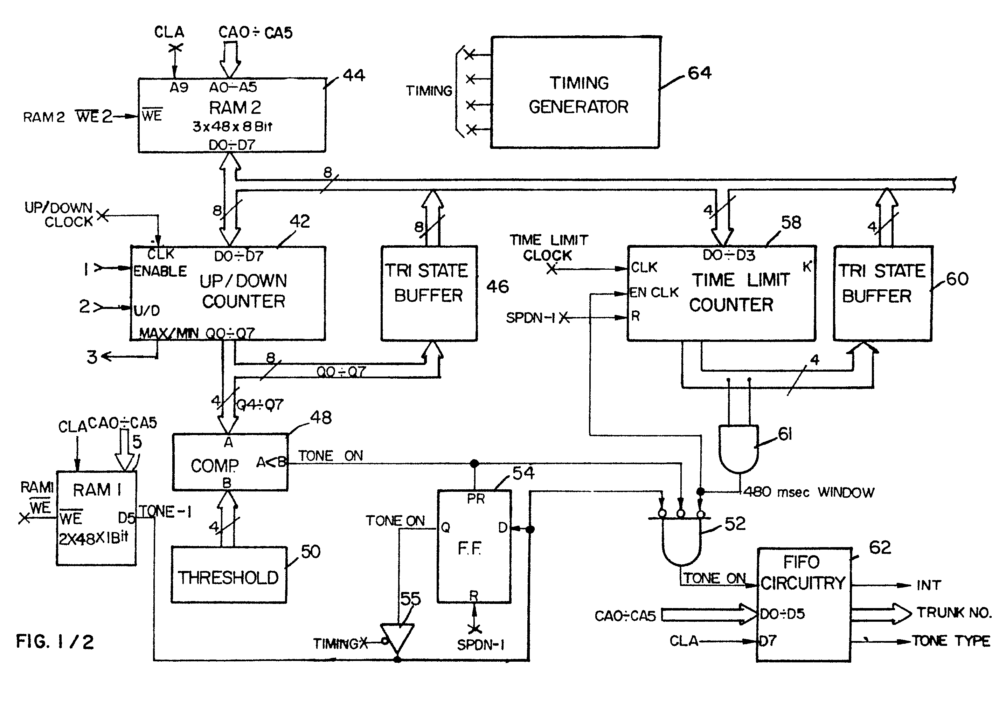

Reference is now made to Fig. 1 which illustrates the tone detector of the present invention in a schematic block diagram form. The tone detector comprises sequence update circuit 10 which receives a sign bit from incoming multiplexed speech. The sign bit may be provided from transmit speech flow circuitry of TASI circuitry. A preferred embodiment of such circuitry is described and claimed in applicants published European Patent Application No. 0025465 published March 25, 1981, corresponding to Application No. 79301917.5. It is appreciated that the sign bit may be provided by any other known circuitry, which is suitable for such a function.

Sequence update circuitry, such as a shift register comprises a RAM 12, such as an MK 4801, which receives a timing signal $\overline{WET}$, a control signal CLA which indicates which frequency is being processed and control signals CAO - CA5 which indicate which of a multiplicity of channels is being currently sampled. A latch 14 receives the sign bit input, via an AND gate 15, as its 0th bit and receives the read out output of RAM 12 as its 1st to 5th bits. Latch 14 provides a six bit output to a comparator 16. A tristate buffer 18 is operative to store the lowest five bits of the latch output in RAM 12. It may thus be appreciated that the shift register 10 provides a multiplexed constantly updated sequence of sign bits representative of the signal received on each of the multiplicity of channels.

According to an alternative embodiment of the invention, the sequence update circuitry need not be time shared and individual circuitry may be provided for each channel.

Comparator 16 receives an input via a 4 to 1 pattern selector 20 from four pattern storage memories 22, 24, 26 and 28. Pattern storage memories 22 and 24 store respective inverse patterns for a first frequency, such as 2600 Hz, while pattern storage memories 26 and 28 store respective inverse patterns for a second frequency, such as 2100 Hz. A flip-flop 30 receives a timing signal $\overline{OE}$ at its PR input and receives at its D input an output signal from comparator 16 indicating that coincidence with a stored pattern has been detected. The $\overline{Q}$ output of flip-flop 30 is supplied as a control input to selector 20. Selector 20 also receives the CLA input indicating which of the two frequencies is being detected at a given portion of the sampling cycle.

It is a particular feature of the invention that the apparatus is able to detect two frequencies in the same sampling duration.

Increment-Decrement Logic Circuitry 32 is operative to receive a PATON output from comparator 16, a MAX-MIN overflow output from an up-down counter 42 and an UP-DOWN input from weighting circuitry 34. Weighting circuitry 34 comprises a multiplexer 36, which receives the CLA frequency indicating input and has two other inputs, one of which is connected to a Divide-By-5 circuit 38 for use in detection of 2100 Hz tones and the other of which is connected to a Divide-By-4 circuit 40 which is used in detection of 2600 Hz tones. Circuits 38 and 40 each receive 8 KHz sample rate inputs. Weighting circuitry 34 is employed to balance the proper count weighting for coincidence percentage due to the difference in pattern occurance percentage for each frequency of the detected signals.

Increment-Decrement circuitry 32 is operative to provide an enabling input to counter 42 in accordance with the following Truth Table:

| PATON | UP/DOWN | MIN/MAX | ENABLE |
|-------|---------|---------|--------|
| NO    | UP      | NO      | NO     |
| NO    | UP      | MAX     | NO     |
| NO    | DOWN    | NO      | YES    |
| NO    | DOWN    | MIN     | NO     |
| YES   | UP      | NO      | YES    |
| YES   | UP      | MAX     | NO     |
| YES   | DOWN    | NO      | NO     |
| YES   | DOWN    | MIN     | NO     |

UP/DOWN counter 42 is an 8-bit counter which communicates with a RAM 44. Clock 42 also receives an up/down clock input at its CLK input, and an input from weighting circuitry 34 at its U/D input. Counter 42 is operative to count up unless it currently receives an input from weighting circuitry 34.

RAM 44 receives a timing signal $\overline{WE2}$ and also receives a CLA timing input and the CAO - CA5 channel select signals. A tri-state buffer 46 assists in the write in function of the RAM in relation to the output of counter 42.

The highest four bits of the counter output of counter 42 are supplied to a comparator 48 which receives a four bit input from a threshold circuit 50, representing a predetermined threshold. When the counter output exceeds the threshold, a TONE ON output is supplied to an inverting AND gate 52, indicating a currently detected tone.

The TONE ON output is also supplied to the PR input of a flip-flop 54 which stores the TONE ON input for being written into the RAM 56. In the illustrated embodiment, RAMS 56 and 12 are embodied in a single RAM chip identified as RAM I. RAM 56 receives the CLA and CA0 - CA5 inputs as well as a timing signal $\overline{WET}$ and is operative to read out a signal representing the absence of detection of a tone at the previous sample of the same channel; this signal being identified as TONE - 1. The Q output of flip-flop 54 is supplied for writing into the RAM 56 via a gate 55 which receives a timing signal $\overline{OE}$. The TONE - 1 signal is supplied also to inverting AND gate 52.

Inverting AND gate 52 also receives an input which defines a time window of typically 480 msec.for exceedance of the threshold at comparator 48. This window is defined by a Divide-By-10 counter 58 which interfaces with a tri-state buffer 60 and outputs via an AND gate 61 to the AND gate 52.

The output of inverting AND gate 52 is supplied to FIFO CIRCUITRY 62 which also receives the CA0 - CA5 inputs as its first six bits and the CLA input as its seventh bit.

The provision of an output from AND gate 52 indicates the current presence of a tone within the window and the absence of such a tone during the previous sample. In response to this input, the FIFO circuitry provides an interrupt signal to utilization circuitry such as a CPU of TASI apparatus and also indicates the channel number and the tone frequency being detected.

It is appreciated that any other suitable output configuration may be employed in any other application of this device.

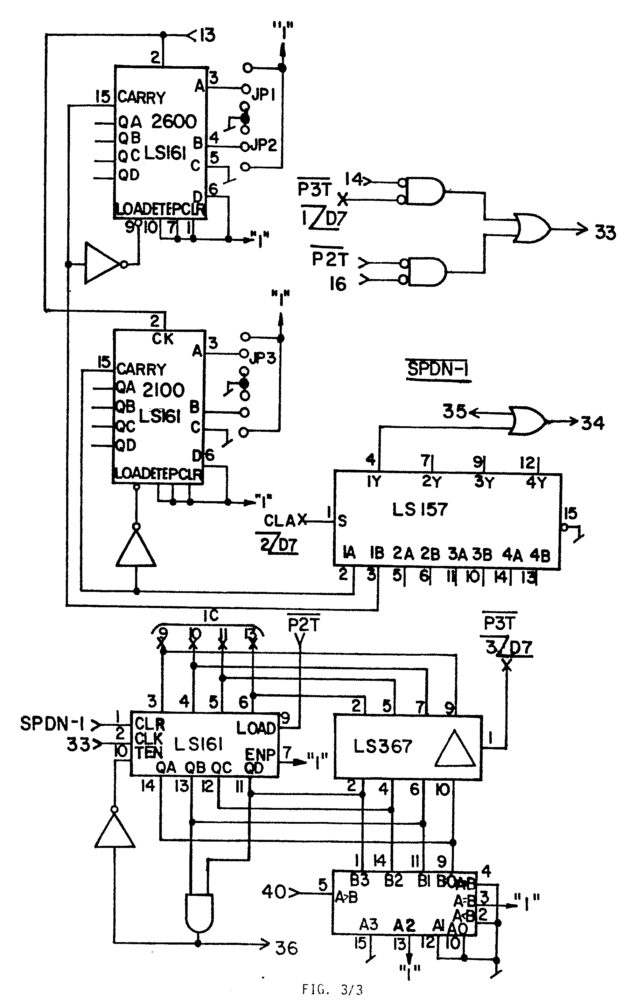

The timing signals mentioned hereinabove are produced by a timing signal generator 64 which is not described herein. The timing signals themselves are illustrated in Fig. 2, it being appreciated that persons skilled in the art can readily construct apparatus to produce the indicated signals.

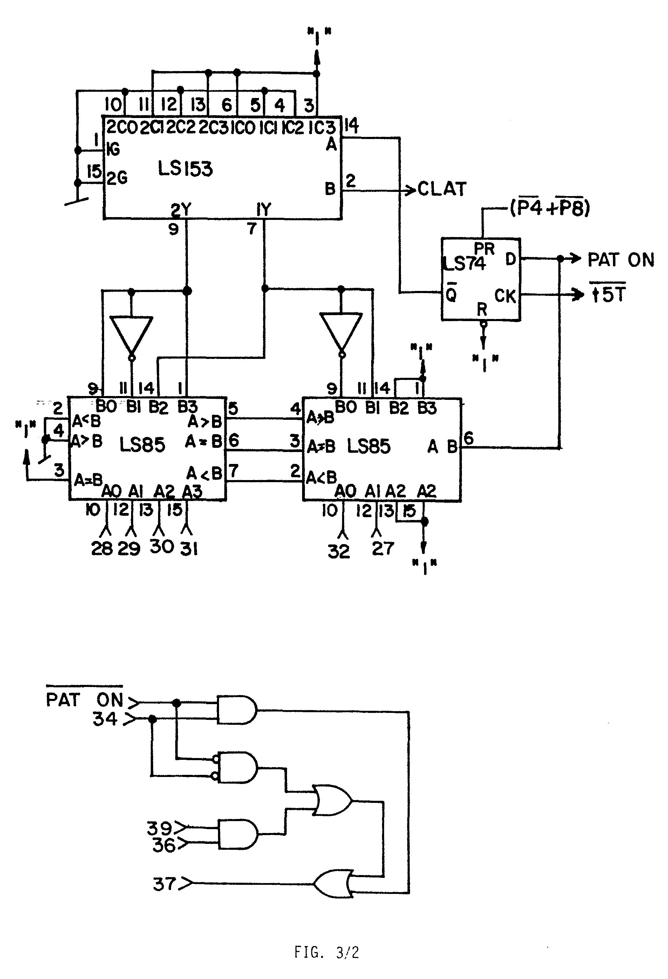

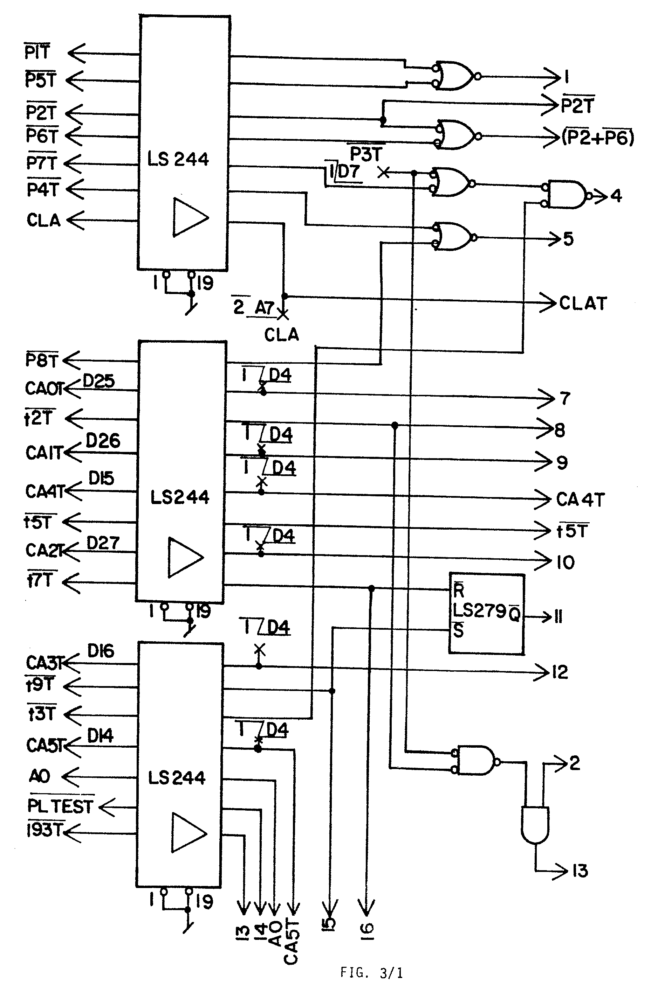

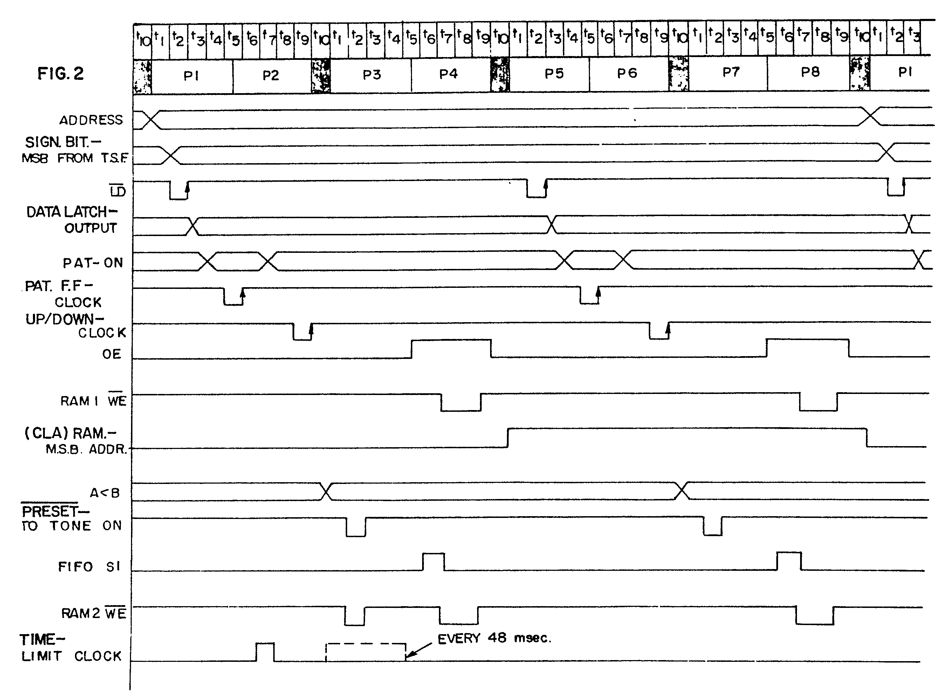

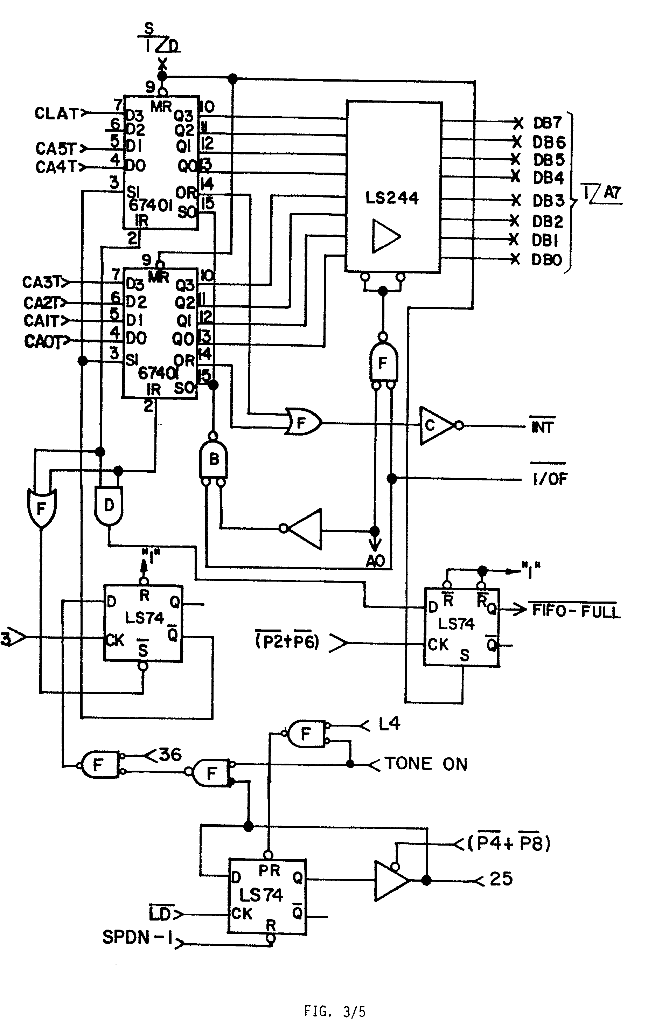

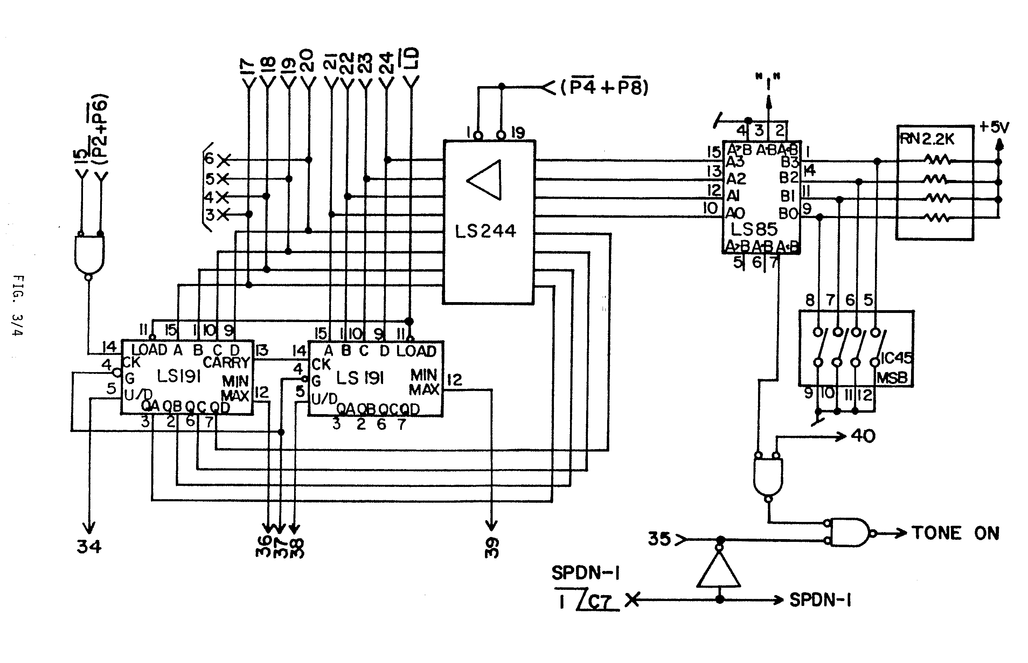

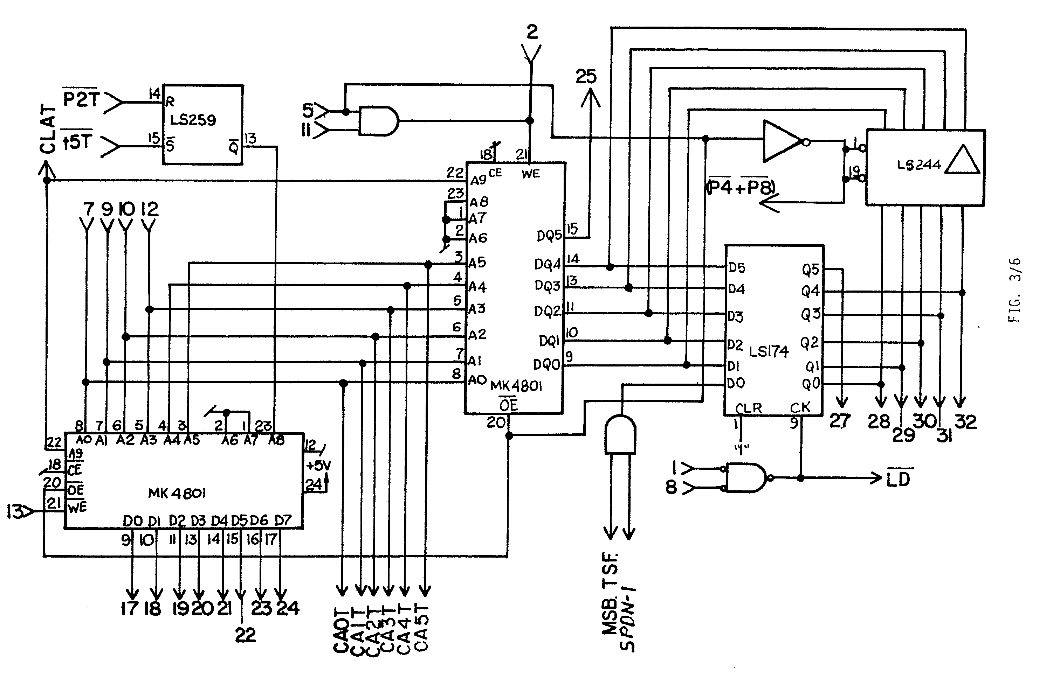

Fig. 3 is an electrical schematic diagram of the circuitry of Fig. 1, those timing has been described hereinabove.

It will be appreciated by persons skilled in the art that the present invention is not limited to what has been particularly shown and described hereinabove. Rather the scope of the present invention is defined only by the claims which follow:

CLAIMS

1.      Tone detector apparatus comprising:

apparatus for receiving the sign bit of a signal being monitored over at least one channel;

sequence update means operative to present an updated sequence of sign bits for each of said at least one channel;

comparator means operative to compare said updated sequence with at least one pattern representative of at least one tone frequency;

means receiving the output of said comparator means and being operative to indicate the percentage of occurances wherein matching was indicated by said comparator means; and

threshold means operative to receive the output of said indicating means and to indicate whether the indicated percentage exceeds a predetermined threshold indicating predetermined frequency tone detection.

2.      Tone detector apparatus according to claim 1 and wherein said at least one channel comprises a plurality of channels.

3.      Tone detector apparatus according to claim 1 and wherein said sequence update means comprises shift register means.

4.        Tone detector apparatus according to claim 1 and
wherein said sequence update means comprises time shared means.


5.        Tone detector apparatus according to claim 1 and
wherein said at least one frequency comprises a plurality
of frequencies.


6.        Tone detector apparatus according to claim 1 and
wherein said at least one pattern comprises inverse patterns
for each of said at least one frequency.


7.        Tone detector apparatus according to claim 1 and
wherein said sequence update means comprises an n-bit latch
which receives the sign bit input as a zero bit, a RAM which
stores the lowest n-1 bits of the latch contents and reads
them out to the latch as the highest n-1 bits upon the next
sample and a tri-state buffer which interfaces between the
RAM and the latch.


8.        Tone detector apparatus according to claim 1 and
also comprising apparatus for sampling incident tones and
for providing sign bits representative of said tones.


9.        Tone detector apparatus according to claim 1 and
wherein said means receiving the output of said comparator
means comprises counter means.

0081294

10.      Tone detector apparatus according to claim 9 and wherein said counter means comprises an up-down counter and increment/decrement logic operative in response to the output of said comparator means and in response to frequency dependent weighting means for operating said counter.

11.      Tone detector apparatus according to claim 10 and also comprising memory means for storage of counts corresponding to individual ones of said plurality of channels.

0081294

FIG. 1/1

FIG. 1/2

FIG. 3/3

FIG. 3/2

FIG. 3/1

FIG. 2

FIG. 3/5

FIG. 3/4

8/9

0081294

0081294

CLAT

P2T

+5T

LS259

MK4801

A0 A1 A2 A3 A4 A5 A6 A7 A8 A9

WE OE CE

D0 D1 D2 D3 D4 D5 D6 D7

+5V

CAOT
CA1T
CA2T
CA3T
CA4T
CA5T

MK4801

A0 A1 A2 A3 A4 A5 A6 A7 A8 A9 CE

OE

WE

DQ0 DQ1 DQ2 DQ3 DQ4 DQ5

MSB. TSF.
SPDN-1

LS174

CLR

D0 D1 D2 D3 D4 D5

CK

Q0 Q1 Q2 Q3 Q4 Q5

LD

P4+P8

LS244

FIG. 3/6